# FASCICULE DE BREVET EUROPEEN

(11) **EP 3 629 004 B1**
(45) Date de publication et mention de la délivrance du brevet: **09.09.2026**
(21) Numéro de dépôt: 19199714.7
(22) Date de dépôt: 26.09.2019
(51) Int. Cl.: G01N 15/14, G03H 1/04, G01N 21/45, G01N 15/10

(54) **PROCÉDÉ ET DISPOSITIF D'OBSERVATION D'UN ÉCHANTILLON SOUS LUMIÈRE AMBIANTE**
BEOBACHTUNGSVERFAHREN UND -VORRICHTUNG EINER PROBE UNTER UMGEBUNGSLICHT
METHOD AND DEVICE FOR OBSERVING A SAMPLE UNDER AMBIENT LIGHT

(30) Priorité: 28.09.2018 FR 1858952
(43) Date de publication de la demande: 01.04.2020
(73) Titulaire: Commissariat à l'Energie Atomique et aux Energies Alternatives, 75015 Paris (FR)
(72) Inventeur: BORDY, Thomas, 38054 Grenoble cedex 09 (FR)
(74) Mandataire: INNOV-GROUP

(56) Documents cités:
- EP-B1- 3 221 688
- WO-A1-2016/078946
- US-A1- 2009 137 908
- US-A1- 2018 046 139

## Description

### DOMAINE TECHNIQUE

Le domaine technique de l'invention est lié à l'observation d'un échantillon, en particulier un échantillon biologique, par un dispositif d'imagerie fonctionnant à la lumière ambiante.

### ART ANTERIEUR

L'observation d'échantillons, et en particulier des échantillons biologiques, par imagerie sans lentille, connaît un développement important depuis ces dix dernières années. Cette technique permet d'observer un échantillon en le disposant entre une source de lumière et un capteur d'image, sans disposer de lentille de formation d'image entre l'échantillon et le capteur d'image, comme par exemple décrit dans US20090137908. Ainsi, le capteur d'image collecte une image d'une onde lumineuse transmise par l'échantillon, sans conjugaison entre le capteur d'image et l'échantillon.

Le document WO2008090330 décrit par exemple un dispositif permettant l'observation de particules biologiques, par imagerie sans lentille. Les particules biologiques sont par exemple des cellules. Le dispositif permet d'associer, à chaque cellule, une figure d'interférence dont la morphologie permet d'identifier le type de cellule. L'imagerie sans lentille apparaît alors comme une alternative simple, et peu onéreuse, à un microscope classique. De plus, elle confère un champ d'observation nettement plus important que ne peut l'être celui d'un microscope.

Dans le domaine visible, l'imagerie sans lentille a été appliquée pour examiner des échantillons comportant des particules, en particulier des particules biologiques ou des cellules, à des fins de caractérisation. On trouvera des exemples dans WO2017178723, WO2016151248, ou WO2016151249. Le recours à l'imagerie sans lentille à des fins de comptage de particule est décrit dans WO2018115734 ou dans WO2015166009, ou dans WO2018060589.

Les documents WO2016189257 ou EP3199941 décrivent l'utilisation de l'imagerie sans lentille pour la caractérisation de lames de tissus, de type lames d'anatomo-pathologie.

Le document US2018/0046139 décrit un procédé et un dispositif d'imagerie sans lentille, associé à un algorithme de reconstruction holographique destiné à réduire un bruit de reconstruction. D'une manière générale, l'objectif est de former des hologrammes d'un objet dans plusieurs reconstruction de phase. Dans l'ensemble des modes de réalisation, il est fait usage d'une source de lumière large bande "broad wavelenght spectrum light source". L'idée de base de ce document est d'acquérir plusieurs hologrammes alors que l'échantillon est exposé à une même illumination. Une filtration selon différentes bandes spectrales, dans le domaine du visible et de l'infra-rouge, est effectuée entre l'échantillon et le capteur d'image. Un autre principe de base de ce document est de combiner des images acquises dans différentes longueurs d'onde, dont des longueurs d'onde visibles.

Dans ces documents précédemment cités, l'imagerie sans lentille est mise en œuvre dans des longueurs d'onde visible. Afin de se prémunir de la lumière ambiante, les dispositifs sont tels que les principaux composants (source de lumière, capteur d'image), ainsi que l'échantillon, sont confinés dans une enceinte étanche à la lumière.

Les inventeurs proposent un dispositif simple à mettre en œuvre, et permettant de relâcher la contrainte d'isolement du capteur à l'égard de la lumière ambiante. Il en résulte une plus grande facilité d'utilisation.

### EXPOSE DE L'INVENTION

Un premier objet de l'invention est un procédé d'observation d'un échantillon, l'échantillon étant disposé entre une source de lumière et un capteur d'image, comportant au moins 10000 pixels, la source de lumière émettant un faisceau d'illumination, se propageant jusqu'à l'échantillon, le faisceau d'illumination étant émis selon une bande spectrale d'illumination s'étendant en dessus de 800 nm, le procédé comportant les étapes suivantes :
a) illumination de l'échantillon par la source de lumière ;
b) acquisition d'une image de l'échantillon par le capteur d'image;
le capteur d'image étant configuré de telle sorte qu'il présente, en chacun de ses pixels, une bande spectrale de détection, bloquant les longueurs d'onde dans une bande spectrale visible, s'étendant au moins entre 400 nm et 750 nm, de telle sorte que l'acquisition d'image peut être effectuée en lumière ambiante, dans la bande spectrale visible, sans que l'image acquise puisse acquise être affectée, ou de façon négligeable, par la lumière ambiante. L'échantillon est disposé à une distance comprise entre 50 µm et 2 mm des pixels.

Selon l'invention, aucune optique de formation d'image n'est disposée entre l'échantillon et le capteur d'image.

Le procédé peut comprendre l'une quelconque des caractéristiques suivantes, prises isolément ou selon les combinaisons techniquement réalisables :
- la bande spectrale de détection est comprise entre 800 nm et 1200 nm ou entre 800 nm et 1000 nm ;
- la bande spectrale d'illumination est comprise entre 800 nm et 1200 nm ou entre 800 nm et 1000 nm ;
- la bande spectrale d'illumination s'étend selon une largeur de bande inférieure ou égale à 50 nm, et de préférence inférieure à 20 nm ;
- la bande spectrale de détection s'étend selon une largeur de bande inférieure ou égale à 50 nm, et de préférence inférieure à 20 nm ;
- la bande spectrale de détection est définie par un filtre de détection passe-haut ou passe-bande, disposé sur le capteur d'image, le filtre de détection étant configuré pour bloquer les longueurs d'onde dans la bande spectrale visible ; le filtre de détection peut notamment être disposé entre le capteur d'image et l'échantillon ;
- la bande spectrale d'illumination est définie par un filtre d'illumination, couplé à la source de lumière ; le filtre d'illumination peut notamment être disposé entre la source de lumière et l'échantillon ;
- lors de l'étape b), le capteur d'image est exposé à une onde lumineuse d'exposition ; le procédé peut alors comporter une application d'un opérateur de reconstruction holographique à l'image acquise lors de l'étape b), de façon à obtenir une image représentative d'une expression complexe de l'onde lumineuse d'exposition. L'expression complexe peut être définie selon une surface de reconstruction, par exemple un plan de reconstruction, s'étendant face au capteur d'image, à une distance de reconstruction non nulle de ce dernier. La surface de reconstruction est de préférence un plan selon lequel s'étend l'échantillon. L'application de l'opérateur de reconstruction holographique peut être réalisée en mettant en œuvre un algorithme itératif de reconstruction holographique, de façon à déterminer une phase de l'onde
lumineuse d'exposition dans le plan de l'échantillon ou dans un plan de détection selon lequel s'étend le capteur d'image.

Un deuxième objet de l'invention est un dispositif d'observation d'un échantillon, comportant :
- une source de lumière, configurée pour émettre un faisceau d'illumination se propageant vers l'échantillon, selon une bande spectrale d'illumination ;
- un capteur d'image pixellisé, comportant au moins 10000 pixels, et configuré pour acquérir une image dans une bande spectrale de détection ;
- un support, agencé pour maintenir l'échantillon entre la source de lumière et le capteur d'image ;
le dispositif étant configuré de telle sorte qu'aucune optique de formation d'image n'est disposé entre le capteur d'image et l'échantillon lorsque l'échantillon est maintenu sur le support ; le dispositif étant configuré de telle sorte que :
- la bande spectrale de détection s'étend au-delà de 800 nm ;
- la bande spectrale de détection bloque les longueurs d'onde dans une bande spectrale visible, s'étendant au moins entre 400 nm et 750 nm ;
- le support est agencé pour maintenir l'échantillon à une distance comprise entre 50 µm et 2 mm des pixels.

Le procédé peut comprendre l'une quelconque des caractéristiques suivantes, prises isolément ou selon les combinaisons techniquement réalisables.
- la bande spectrale de détection est comprise entre 800 nm et 1200 nm ou entre 800 nm et 1000 nm;
- le capteur d'image est couplé à un filtre de détection, définissant la bande spectrale de détection;
- la bande spectrale d'illumination est comprise entre 800 nm et 1200 nm ou entre 800 nm et 1000 nm;
- la bande spectrale d'illumination s'étend selon une largeur de bande inférieure ou égale à 50 nm, et de préférence inférieure à 20 nm ;
- la bande spectrale de détection s'étend selon une largeur de bande inférieure ou égale à 50 nm, et de préférence inférieure à 20 nm;
- la source de lumière est une source de lumière laser ;
- la source de lumière est une diode électroluminescente ;
- la source de lumière est couplée à un filtre d'illumination, le filtre d'illumination définissant la bande spectrale d'illumination.
- le dispositif comporte une unité de traitement configurée pour appliquer un opérateur de reconstruction holographique à l'image acquise par le capteur d'image, de façon à obtenir une image complexe d'une onde lumineuse d'exposition à laquelle est exposé le capteur d'image lors de l'acquisition de l'image.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

Les figures 1A et 1B sont des exemples de dispositif selon l'invention.
La figure 2 montre les bandes spectrales de transmission d'un filtre de Bayer.
Les figures 3A et 3B sont des exemples d'images respectivement acquises en utilisant un dispositif de référence selon l'art antérieur et selon l'invention. Les figures 3C et 3D sont des détails de régions d'intérêt respectivement délimitées sur les figures 3A et 3B. Les figures 3E et 3F sont des profils respectivement obtenus à partir des figures 3C et 3D, le long de lignes respectivement tracées sur ces dernières.
La figure 4 montre un exemple qui ne fait pas partie de l'invention.

### EXPOSE DE MODES DE REALISATION PARTICULIERS

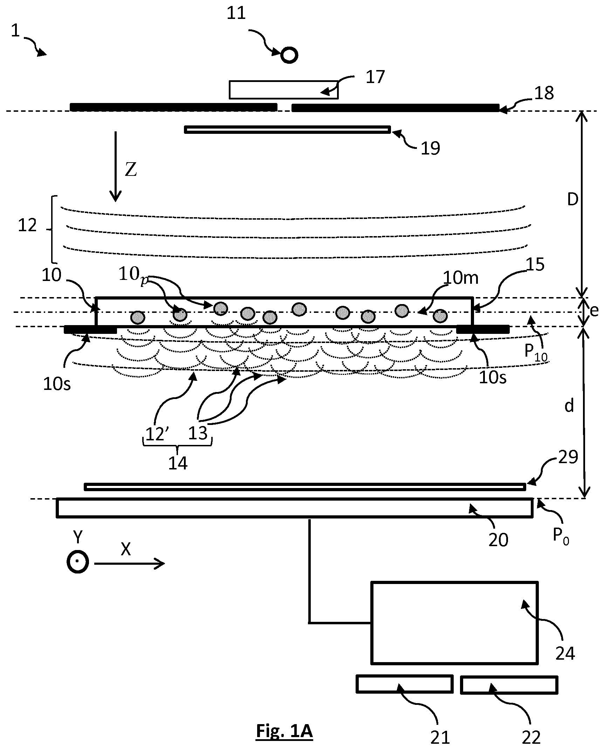

La figure 1A représente un exemple de dispositif 1 permettant une mise en œuvre de l'invention. Une source de lumière 11 est configurée pour émettre un faisceau lumineux 12, dit faisceau d'illumination, se propageant en direction d'un échantillon 10. Le faisceau d'illumination atteint l'échantillon en se propageant selon un axe de propagation Z.

Le faisceau d'illumination est émis selon une bande spectrale d'illumination Δλ₁₂. La bande spectrale d'illumination Δλ₁₂ s'étend de préférence en dehors de la bande spectrale visible. Par bande spectrale visible, on entend une bande spectrale comprise entre 400 nm et 750 nm, ou entre 400 et 780 nm. De préférence, la bande spectrale d'illumination Δλ₁₂ s'étend de entre 750 nm ou 780 nm et 10 µm, et de préférence entre 800 nm et 10 µm, et de préférence entre 750 nm voire 800 nm et 5 µm, et encore de préférence entre 750 nm voire 800 nm et 2µm, ou entre 750 nm voire 800 nm et 1200 nm, ou entre 750 nm voire 800 nm et 1000 nm.

Par s'étendre entre *m* et *n, m* et *n* représentant des valeurs de longueur d'onde, il est entendu que plus de 80
% de l'intensité de la lumière émise, voire plus de 90% ou 95% de l'intensité émise, est comprise entre *m* et *n.* Le terme s'étendre entre *m* et *n* ne signifie pas forcément s'étendre de m jusqu'à *n.*

L'échantillon 10 est un échantillon que l'on souhaite caractériser. Il comprend notamment un milieu 10ₘ dans lequel baignent des particules 10ₚ. Le milieu 10ₘ peut être un milieu liquide. Il peut comprendre un liquide corporel, obtenu par exemple à partir de sang ou d'urine ou de lymphe ou de liquide céphalorachidien. Il peut également s'agir d'un milieu de culture, comportant des nutriments permettant le développement de microorganismes ou de cellules. Par particule, on entend notamment, et de façon non exhaustive :
- une cellule, qu'il s'agisse d'une cellule de culture ou une cellule corporelle, par exemple une cellule sanguine ;
- un microorganisme, par exemple une bactérie ou une levure ou une microalgue ;
- une particule solide, par exemple une microbille, la microbille pouvant être fonctionnalisée, de façon à favoriser un greffage avec un analyte ;
- une particule formant une émulsion dans le milieu 10ₘ, en particulier une particule insoluble dans le milieu 10ₘ, un exemple étant une gouttelette lipidique dans un milieu aqueux.

Une particule 10ₚ peut être solide ou liquide.

L'échantillon 10 peut être une fine lame de tissu biologique, telle d'une lame d'anatomopathologie. L'épaisseur d'une telle lame est de l'ordre de quelques dizaines de microns.

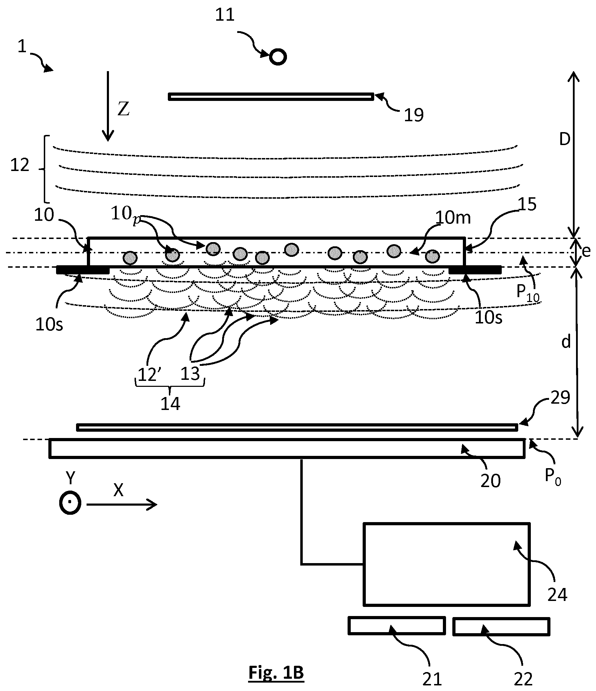

L'échantillon 10 est, dans cet exemple, contenu dans une chambre fluidique 15. La chambre fluidique 15 est par exemple une chambre fluidique de type Gene Frame^{®} d'épaisseur e=250 µm. L'épaisseur e de l'échantillon 10, selon l'axe de propagation, varie typiquement entre 10 µm et 1 cm, et est de préférence comprise entre 20 µm et 500 µm. L'échantillon s'étend selon un plan P₁₀, dit plan de l'échantillon. Le plan de l'échantillon P₁₀ est de préférence perpendiculaire à l'axe de propagation Z, ou sensiblement perpendiculaire à ce dernier. Par sensiblement perpendiculaire, on entend perpendiculaire à une tolérance angulaire près, par exemple à ±10% ou ±20% près. Le plan de l'échantillon est défini par les axes X et Y représentés sur les figures 1A et 1B. L'échantillon est maintenu sur un support 10s à une distance d d'un capteur d'image 20.

La distance *D* entre la source de lumière 11 et la chambre fluidique 15 est de préférence supérieure à 1 cm. Elle est de préférence comprise entre 2 et 30 cm. Avantageusement, la source de lumière 11, vue par l'échantillon, est considérée comme ponctuelle. Cela signifie que son diamètre (ou sa diagonale) est préférentiellement inférieur au dixième, mieux au centième de la distance entre la chambre fluidique 15 et la source de lumière. Sur la figure 1A, la source de lumière est une diode électroluminescente. Elle est généralement associée à diaphragme 18, ou filtre spatial. L'ouverture du diaphragme est typiquement comprise entre 5 µm et 1 mm, de préférence entre 50 µm et 500 µm.

Le diaphragme peut être remplacé par une fibre optique, dont une première extrémité est placée face à la source de lumière 11 et dont une deuxième extrémité est placée en regard de l'échantillon 10. Le dispositif représenté sur la figure 1A comporte également un diffuseur 17, disposé entre la source de lumière 11 et le diaphragme 18. L'usage d'un tel diffuseur permet de s'affranchir de contraintes de centrage de la source de lumière 11 par rapport à l'ouverture du diaphragme 18, comme décrit dans EP3221688.

Alternativement, la source de lumière peut être une source laser, telle une diode laser, comme représenté sur la figure 1B. Dans ce cas, il n'est pas utile de lui associer un filtre spatial ou un diffuseur.

De préférence, la bande spectrale d'illumination Δλ₁₂ s'étend selon une largeur de bande inférieure à 100 nm. Par largeur de bande spectrale, on entend une largeur à mi-hauteur de ladite bande spectrale. De préférence, la largeur de la bande spectrale d'illumination Δλ₁₂ est inférieure à 50 nm, voire inférieure ou égale à 20 nm.

L'échantillon 10 est disposé entre la source de lumière 11 et le capteur d'image 20. Le capteur d'image 20 définit un plan de détection P₀, s'étendant de préférence parallèlement, ou sensiblement parallèlement au plan P₁₀ selon lequel s'étend l'échantillon. Le terme sensiblement parallèlement signifie que les deux éléments peuvent ne pas être rigoureusement parallèles, une tolérance angulaire de quelques degrés, de l'ordre de ± 20° ou ±10° étant admise.

Le capteur d'image 20 est apte à former une image I₀ de l'échantillon 10 selon le plan de détection P₀. Dans l'exemple représenté, il s'agit d'un capteur d'image 20 comportant une matrice de pixels, de type CCD ou un CMOS. Le capteur d'image comporte un nombre de pixels égal ou supérieur à 10000, et de préférence supérieur à 100000. Le plan de détection P₀ s'étend de préférence perpendiculairement à l'axe de propagation Z. La distance *d* entre l'échantillon 10 et la matrice de pixels du capteur d'image 20 est comprise entre 50 µm et 2 mm, de préférence comprise entre 100 µm et 2 mm.

On remarque, dans l'invention, l'absence d'optique de grossissement ou de formation d'image entre le capteur d'image 20 et l'échantillon 10. Cela n'empêche pas la présence éventuelle de microlentilles de focalisation au niveau de chaque pixel du capteur d'image 20, ces dernières n'ayant pas de fonction de grandissement de l'image acquise par le capteur d'image, leur fonction étant d'optimiser l'efficacité de détection.

Le capteur d'image 20 est configuré pour former une image dans une bande spectrale de détection Δλ₂₀. Avantageusement, la bande spectrale de détection ne s'étend pas dans la bande spectrale visible, ou de façon négligeable. Elle s'étend de préférence entre 750 nm ou 780 nm et 10 µm, et de préférence entre 800 nm et 10 µm, et de préférence entre 750 nm voire 800 nm et 5 µm, et encore de préférence entre 750 nm voire 800 nm et 2µm, ou entre 750 nm voire 800 nm et 1200 nm, ou entre 750 nm voire 800 nm et 1000 nm. Parce qu'elle s'étend en dehors dans la bande spectrale visible, la bande spectrale de détection Δλ₂₀ permet une acquisition de l'image lorsque le dispositif 1, et notamment le capteur d'image 20, est exposé à un éclairage ambiant, dans la bande spectrale visible. La bande spectrale de détection est configurée de telle sorte que l'image acquise par le capteur d'image 20 n'est pas affectée, ou de façon négligeable, par l'éclairage ambiant. Ainsi, le dispositif 1 peut être utilisé sans qu'il soit nécessaire de le disposer dans une enceinte étanche à la lumière. Il peut être utilisé à la lumière ambiante. Le niveau de lumière ambiante auquel le dispositif peut fonctionner dépend de la fraction de la bande spectrale visible détectée par le capteur d'image.

De préférence, la bande spectrale de détection Δλ₂₀ s'étend selon une largeur de bande inférieure à 100 nm. Par largeur de bande spectrale, on entend une largeur à mi-hauteur de ladite bande spectrale. De préférence, la largeur de la bande spectrale de détection Δλ₂₀ est inférieure à 50 nm, voire inférieure ou égale à 20 nm.

On comprend que la bande spectrale de détection Δλ₂₀ et la bande spectrale d'illumination Δλ₁₂ se recouvrent, au moins partiellement.

La bande spectrale de détection Δλ₂₀ peut être définie par les propriétés intrinsèques des pixels. Le capteur d'image comporte alors des pixels aptes à détecter des photons uniquement dans la bande spectrale de détection. De façon plus simple, la bande spectrale de détection Δλ₂₀ peut être définie par filtre de détection 29, de type passe-haut ou passe-bande, disposé entre le capteur d'image 20 et l'échantillon 10. De façon analogue, la bande spectrale d'illumination Δλ₁₂ peut être définie par les propriétés intrinsèques de la source de lumière 11. Ceci est notamment le cas lorsque la source de lumière est un laser, comme représenté sur la figure 1B. La bande spectrale d'illumination peut être définie par un filtre d'illumination 19, disposé entre la source de lumière et l'échantillon. Le recours à un filtre d'illumination 19 est usuel lorsque la source de lumière 11 est une source de lumière blanche ou une diode électroluminescente.

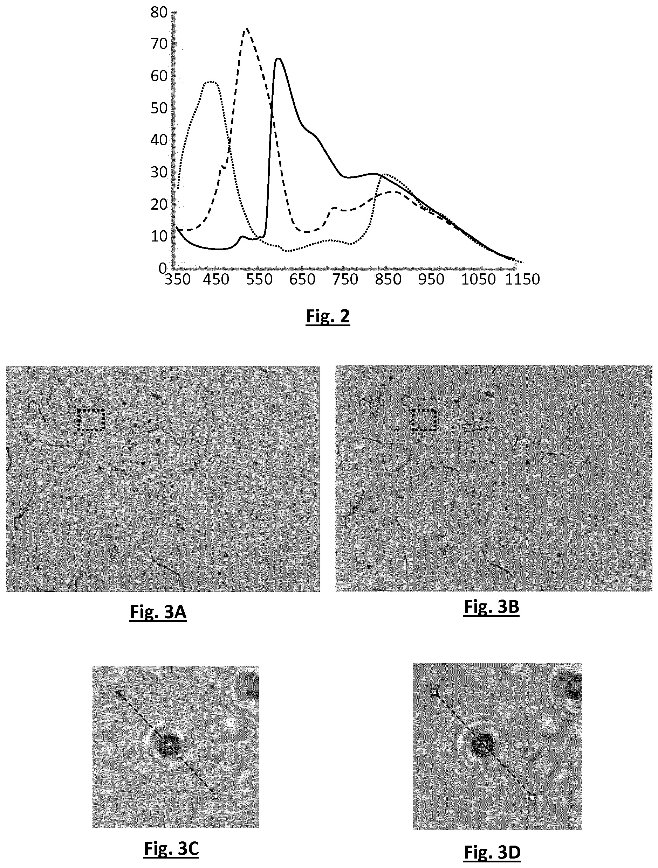

Le capteur d'image 20 peut être un capteur CMOS de type "RGB", comportant des pixels dont la bande spectrale de détection est définie par un filtre de Bayer. Ainsi, les pixels du capteur d'image sont respectivement sensibles dans des bandes spectrales correspondant aux couleurs rouge, verte et bleu de la bande spectrale visible. La figure 2 représente les bandes passantes de détection définies par le filtre de Bayer. L'axe des abscisses correspond à la longueur d'onde, exprimée en nm, tandis que l'axe des ordonnées correspond à la transmission, c'est-à-dire au pourcentage de flux lumineux transmis. Les courbes en pointillés, tirets et traits pleins correspondent respectivement aux bandes passantes dans le bleu, le vert et le rouge. Ce type de courbe est usuel dans le domaine des capteurs d'image RGB standard. On observe qu'au-delà de 850 nm, la transmission est équivalente dans chaque bande spectrale. Au-delà de 1000 nm, la transmission diminue. Aussi, lorsque le capteur d'image est un capteur RGB standard, il est préférable que la bande spectrale de détection soit comprise dans l'intervalle [750 nm - 1100 nm], et de préférence [850 nm - 1000 nm]. Il en est de même de la bande spectrale d'illumination. On dispose alors de pixels dont la transmission est uniforme, tout en étant suffisante pour former des images exploitables. Le capteur d'image 20 se comporte alors comme un capteur monochrome. Avec de type de capteur d'image, comportant un filtre de Bayer, la bande spectrale de détection est définie par un filtre de détection 29 de type passe-bande, ou passe-haut, délimitant la bande passante de détection.

Comme évoqué dans les demandes citées dans l'art antérieur, sous l'effet de l'onde lumineuse incidente 12, les particules 10ₚ présentes dans l'échantillon peuvent engendrer une onde diffractée 13, susceptible de produire, au niveau du plan de détection P₀, des interférences, en particulier avec une partie 12' de l'onde lumineuse incidente 12 transmise par l'échantillon. Par ailleurs, l'échantillon 10 peut absorber une partie de l'onde lumineuse incidente 12. Ainsi, l'onde lumineuse 14, transmise par l'échantillon, et à laquelle est exposé le capteur d'image 20, désignée par le terme "onde lumineuse d'exposition". L'onde lumineuse d'exposition 14 peut comprendre :
- une composante 13 résultant de la diffraction de l'onde lumineuse incidente 12 par chaque particule de l'échantillon ;
- une composante 12' résultant de la transmission de l'onde lumineuse incidente 12 par l'échantillon, une partie de cette dernière pouvant être absorbée dans l'échantillon.

Ces composantes forment des interférences dans le plan de détection. Aussi, l'image *I₀* acquise par le capteur d'image comporte des figures d'interférences (ou figures de diffraction), chaque figure d'interférence pouvant être associée à une particule 10ₚ de l'échantillon.

Une unité de traitement 21, par exemple un microprocesseur, est apte à traiter chaque image *I₀* acquise par le capteur d'image 20. En particulier, l'unité de traitement 21 est un microprocesseur relié à une mémoire programmable 22 dans laquelle est stockée une séquence d'instructions pour effectuer les opérations de traitement d'images et de calculs décrites dans cette description. L'unité de traitement peut être couplée à un écran 24 permettant l'affichage d'images acquises par le capteur d'image 20 ou calculées par le processeur 21.

Une image *I*₀ acquise par le capteur d'image 20, également appelée hologramme, peut faire l'objet d'une reconstruction, dite reconstruction holographique. Comme décrit en lien avec l'art antérieur, on peut appliquer, à l'image acquise *I₀* par le capteur d'image 20, un opérateur de propagation holographique h, de façon à calculer une amplitude complexe *A*(*x, y, z*) représentative de l'onde lumineuse d'exposition 14, et cela en tout point de coordonnées (*x, y,* z) de l'espace, et plus particulièrement entre le capteur d'image 20 et l'échantillon 10. Les coordonnées (*x,* y) désignent des coordonnées, dites coordonnées radiales, parallèlement au plan de détection *P*₀. La coordonnée *z* est une coordonnée selon l'axe de propagation Z, traduisant une distance entre l'échantillon 10 et le capteur d'image 20.

L'amplitude complexe peut être obtenue par une des expressions suivantes :
*A*(*x, y, z) = I₀*(*x, y, z)* * *h* * désignant l'opérateur produit de convolution, ou, et de préférence, $A \left(x, y, z\right) = \sqrt{{I}_{0} \left(x, y, z\right)} ∗ h$, ou encore : $A \left(x, y, z\right) = \frac{\sqrt{{I}_{0} \left(x, y, z\right)}}{\overline{{I}_{0}}} ∗ h$, *̅I̅*̅₀̅ étant une moyenne de l'image acquise.

L'opérateur de propagation h a pour fonction de décrire la propagation de la lumière entre le capteur d'image 20 et un point de coordonnées (*x, y, z*), situé à une distance |*z*| du capteur d'image. L'opérateur de propagation est par exemple la fonction de Fresnel-Helmholtz, telle que : $h \left(x, y, z\right) = \frac{1}{jλz} {e}^{j 2 π \frac{z}{λ}} exp \left(jπ\frac{{x}^{2} + {y}^{2}}{λz}\right) .$

Il est alors possible de déterminer une propriété de l'onde lumineuse d'exposition 14, par exemple le module *M*(*x, y, z*) et/ou la phase φ (*x, y, z*), à la distance |z| avec :
- $M \left(x, y, z\right) = abs \left[A\left(x, y, z\right)\right] ;$
- $φ \left(x, y, z\right) = arg \left[A\left(x, y, z\right)\right] ;$

Les opérateurs *abs* et *arg* désignent respectivement le module et l'argument.

La distance |z| est une distance de reconstruction.

L'expression complexe *A*(*x, y, z*) de l'onde lumineuse 14, en tout point de coordonnées (*x, y,* z) de l'espace, est telle *que* : *A*(*x, y, z) = M*(*x, y, z*)*e*^{*jφ*(*x,y,z*)}*.*

L'expression complexe A est une grandeur complexe dont l'argument et le module sont respectivement représentatifs de la phase et de l'intensité de l'onde lumineuse d'exposition 14.

En mettant en œuvre des algorithmes de reconstruction holographique, il est possible de déterminer l'expression complexe *A* selon un plan de reconstruction. Le plan de reconstruction est de préférence parallèle au plan de détection *P₀* et/ou au plan de l'échantillon *P₁₀.* On obtient alors une image complexe *A_{Z}* de l'onde lumineuse d'exposition 14 dans le plan de reconstruction. Avantageusement, le plan de reconstruction est le plan *P₁₀* selon lequel s'étend l'échantillon 10. Afin d'obtenir une reconstruction holographique de bonne qualité, l'image acquise par le capteur d'image peut faire l'objet d'un algorithme de reconstruction itératif. Des algorithmes de reconstruction itératifs sont par exemple décrits dans WO2016189257 ou dans WO2017162985.

Il est possible de former des images *M_{Z}* et φ_{z} représentant respectivement le module ou la phase d'une image complexe complexe *A_{Z}* dans un plan *P_{Z}* situé à une distance |z| du plan de détection *P₀,* avec *M_{Z}=mod (A_{Z})* et φ_{z} *=arg* (*A_{Z}*)*.* Lorsque le plan de reconstruction *P_{Z}* correspond à un plan selon lequel s'étend l'échantillon, les images *M_{Z}* et φ_{z} permettent une observation de l'échantillon 10 avec une résolution spatiale correcte.

### Essais

Un essai a été effectué en utilisant un dispositif de référence et un dispositif selon l'invention. Chaque dispositif comporte :
- une source de lumière LED infrarouge, émettant autour d'une longueur d'onde centrale égale à 980 nm, de largeur de bande 20nm (± 10 nm de part et d'autre de la longueur d'onde centrale);
- un capteur d'image CMOS 8 bits IDS UI-1492LE-M composé de 3884 x 2764 pixels carrés de côté 1.67 µm;
- un diaphragme définissant une ouverture de 150 µm disposé au niveau de la source de lumière.

Le dispositif de référence est placé dans une chambre noire, formant une enceinte étanche à la lumière. Le dispositif selon l'invention comporte un filtre de détection 29 placé directement sur le capteur d'image, définissant une bande spectrale de détection centrée sur 980 nm et de largeur spectrale égale à 10 nm. Ainsi, la bande spectrale de détection s'étend entre 975 nm et 985 nm. Dans cet exemple, le dispositif selon l'invention est utilisé à la lumière du jour.

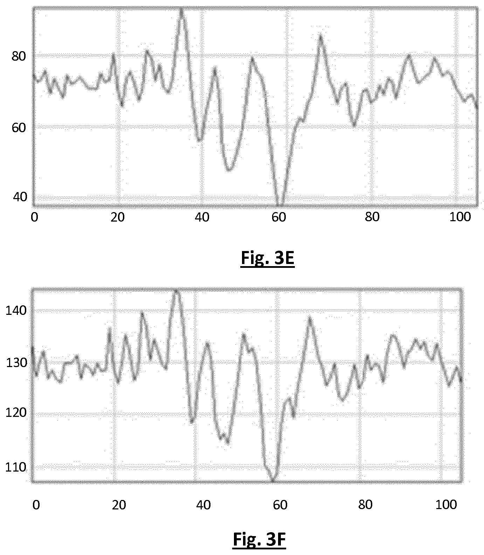

Un échantillon, comportant des particules micrométriques en solution aqueuse, a été disposé à une distance de 1.5 mm du capteur d'image. Les figures 3A et 3B sont respectivement des images acquises par le capteur d'image, respectivement avec le dispositif de référence, et avec le dispositif selon l'invention. Sur ces figures, on a délimité des zones d'intérêt par des cadres en pointillés. Les figures 3C et 3D correspondent à des zooms pratiqués sur les régions d'intérêt. Les figures 3E et 3F montrent des profils d'intensité pratiqués à partir de chaque figure, le long d'une ligne en pointillés. Ces profils montrent que la qualité de l'image est équivalente avec les deux dispositifs.

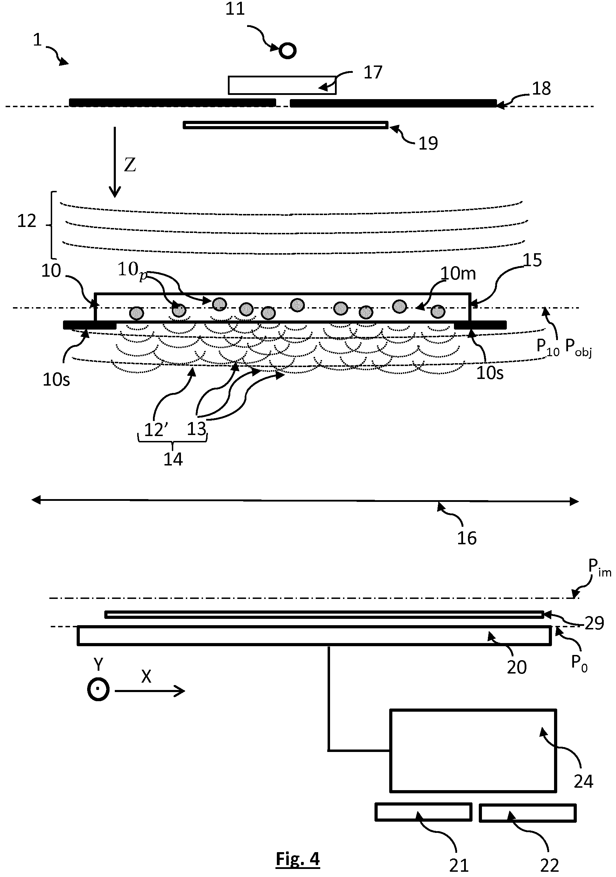

Selon un exemple qui ne fait pas partie de l'invention, schématisé sur la figure 4, un système optique 16 de formation d'image est disposé entre l'échantillon et le capteur d'image, le capteur d'image étant localisé selon une configuration dite défocalisée. L'optique de formation d'image 16 peut comporter une lentille ou un objectif. L'optique de formation d'image 16 définit un plan focal objet P_{obj} et un plan focal image Pᵢₘ. Selon la configuration défocalisée :
- le plan focal objet P_{obj} est décalé du plan selon lequel s'étend l'échantillon selon une distance dite de défocalisation ;
- et/ou le plan focal image Pᵢₘ est décalé du plan détection selon une distance dite de défocalisation ;

La distance de défocalisation peut être comprise entre 5 µm et 5 mm, et de préférence entre 10 µm et 2 mm. De la même manière qu'en configuration sans lentille, une telle configuration permet l'obtention d'une image dans laquelle des éléments diffractants de l'échantillon, par exemple des particules, apparaissent sous la forme de figures de diffraction, des interférences se produisant entre l'onde lumineuse émise par la source de lumière et se propageant jusqu'au capteur d'image et une onde de diffraction générée par chaque élément diffractant de l'échantillon. Dans la figure 4, le plan objet P_{obj} est confondu avec le plan de l'échantillon P₁₀. Le plan image Pᵢₘ est décalé par rapport au plan de détection P₀. Les caractéristiques décrites en lien avec le mode de réalisation représenté sur les figures 1A et 1B peuvent s'appliquer à la configuration défocalisée.

Toutefois, une configuration en imagerie sans lentille selon l'invention est préférée, par le plus grand champ d'observation qu'elle procure.

L'invention pourra être mise en œuvre pour l'observation d'échantillons dans le domaine de la biologie ou de la santé, ou dans d'autres domaines industriels, par exemple l'agroalimentaire, le contrôle de l'environnement.

## Revendications

1. Procédé d'observation d'un échantillon (10), l'échantillon étant disposé entre une source de lumière (11) et un capteur d'image (20), comportant au moins 10000 pixels, la source de lumière émettant un faisceau d'illumination (12), se propageant jusqu'à l'échantillon, le faisceau lumineux d'illumination étant émis selon une bande spectrale d'illumination (Δλ₁₂) s'étendant en dessus de 800 nm, le procédé comportant les étapes suivantes :
a) illumination de l'échantillon (10) par la source de lumière ;
b) acquisition d'une image de l'échantillon (*I₀*) par le capteur d'image (20), aucune optique de formation d'image n'étant disposée entre l'échantillon et le capteur d'image;
le procédé étant configuré de sorte que le capteur d'image (20) présente, en chacun desdits pixels, une bande spectrale de détection (Δλ₂₀), bloquant les longueurs d'onde dans une bande spectrale visible, s'étendant au moins entre 400 nm et 750 nm, de telle sorte que l'acquisition d'image peut être effectuée en lumière ambiante, dans la bande spectrale visible, sans que l'image acquise puisse acquise être affectée, ou de façon négligeable, par la lumière ambiante, et en ce que l'échantillon est disposé à une distance comprise entre 50 µm et 2 cm des pixels.

2. Procédé selon la revendication 1, dans lequel la bande spectrale de détection (Δλ₂₀) est comprise entre 800 nm et 1200 nm ou entre 800 nm et 1000 nm.

3. Procédé selon l'une quelconque des revendications précédentes, dans lequel la bande spectrale d'illumination (Δλ₁₂) est comprise entre 800 nm et 1200 nm ou entre 800 nm et 1000 nm.

4. Procédé selon l'une quelconque des revendications précédentes, dans lequel :
- la bande spectrale d'illumination s'étend selon une largeur de bande inférieure ou égale à 50 nm, et de préférence inférieure à 20 nm ;
- et/ou la bande spectrale de détection s'étend selon une largeur de bande inférieure ou égale à 50 nm, et de préférence inférieure à 20 nm.

5. Procédé selon l'une quelconque des revendications précédentes, dans lequel la bande spectrale de détection (Δλ₂₀) est définie par un filtre de détection (29) passe-haut ou passe-bande, disposé sur le capteur d'image, le filtre de détection étant configuré pour bloquer les longueurs d'onde dans la bande spectrale visible.

6. Procédé selon l'une quelconque des revendications précédentes, dans lequel la bande spectrale d'illumination (Δλ₁₂) est définie par un filtre d'illumination (19), couplé à la source de lumière (11).

7. Procédé selon l'une quelconque des revendications précédentes, dans lequel lors de l'étape b), le capteur d'image est exposé à une onde lumineuse d'exposition (14), le procédé comportant une application d'un opérateur de reconstruction holographique (h) à l'image (*I₀*) acquise lors de l'étape b), de façon à obtenir une image (*A*_{Z}) représentative d'une expression complexe de l'onde lumineuse d'exposition.

8. Dispositif (1) d'observation d'un échantillon (10), comportant :
- une source de lumière (11), configurée pour émettre un faisceau d'illumination se propageant vers l'échantillon, selon une bande spectrale d'illumination (Δλ₁₂);
- un capteur d'image pixellisé (20), comportant au moins 10000 pixels, et configuré pour acquérir une image (*I₀*) dans une bande spectrale de détection (Δλ₂₀);
- un support (10s), agencé pour maintenir l'échantillon entre la source de lumière et le capteur d'image ;
le dispositif étant configuré de telle sorte qu'aucune optique de formation d'image n'est disposé entre le capteur d'image et l'échantillon lorsque l'échantillon est maintenu sur le support ;
et que le capteur d'image (20) est tel qu'en chacun desdits pixels :
- la bande spectrale de détection (Δλ₂₀) s'étend au-delà de 800 nm ;
- la bande spectrale de détection (Δλ₂₀) bloque les longueurs d'onde dans une bande spectrale visible, s'étend au moins entre 400 nm et 750 nm ;
de telle sorte que l'acquisition d'image peut être effectuée en lumière ambiante, dans la bande spectrale visible, sans que l'image acquise puisse être affectée, ou de façon négligeable, par la lumière ambiante ;
et en ce que le support est agencé pour maintenir l'échantillon à une distance comprise entre 50 µm et 2 cm des pixels.

9. Dispositif selon la revendication 8, dans lequel la bande spectrale de détection (Δλ₂₀) est comprise entre 800 nm et 1200 nm ou entre 800 nm et 1000 nm.

10. Dispositif selon l'une quelconque des revendications 8 ou 9, dans lequel le capteur d'image est couplé à un filtre de détection (29), définissant la bande spectrale de détection.

11. Dispositif selon l'une quelconque des revendications 8 à 10, dans lequel la bande spectrale d'illumination (Δλ₁₂) est comprise entre 800 nm et 1200 nm ou entre 800 nm et 1000 nm.

12. Dispositif selon l'une quelconque des revendications 8 à 11, dans lequel :
- la bande spectrale d'illumination (Δλ₁₂) s'étend selon une largeur de bande inférieure ou égale à 100 nm ou à 50 nm, et de préférence inférieure à 20 nm ;
- et/ou la bande spectrale de détection (Δλ₂₀) s'étend selon une largeur de bande inférieure ou égale à 50 nm, et de préférence inférieure à 20 nm.

13. Dispositif selon l'une quelconque des revendications 8 à 12 dans lequel :
- la source de lumière (11) est une source de lumière laser ;
- ou la source de lumière est une diode électroluminescente couplée à un filtre d'illumination (19), le filtre d'illumination définissant la bande spectrale d'illumination.

14. Dispositif selon l'une quelconque des revendications 8 à 13, comportant une unité de traitement (21) configurée pour appliquer un opérateur de reconstruction holographique à l'image acquise par le capteur d'image, de façon à obtenir une image complexe d'une onde lumineuse d'exposition (14) à laquelle est exposé le capteur d'image lors de l'acquisition de l'image.

## Patentansprüche

1. Verfahren zur Beobachtung einer Probe (10), wobei die Probe zwischen einer Lichtquelle (11) und einem Bildsensor (20) mit mindestens 10000 Pixeln angeordnet ist, wobei die Lichtquelle einen bis zur Probe reichenden Beleuchtungsstrahl (12) aussendet, wobei der Beleuchtungsstrahl in einem Beleuchtungsspektralband (Δλ₁₂) ausgesendet wird, das über 800 nm hinausreicht, wobei das Verfahren die folgenden Schritte umfasst:
a) Beleuchtung der Probe (10) durch die Lichtquelle;
b) Erfassung eines Bildes der Probe (*I₀* ) durch den Bildsensor (20), wobei zwischen der Probe und dem Bildsensor keine abbildende Optik angeordnet ist;
wobei das Verfahren so ausgelegt ist, dass der Bildsensor (20) in jedem genannten derPixel ein Detektionsspektralband (Δλ₂₀) aufweist, das Wellenlängen in einem sichtbaren Spektralband blockiert, das sich mindestens zwischen 400 nm und 750 nm erstreckt, sodass die Bilderfassung bei Umgebungslicht im sichtbaren Spektralband erfolgen kann, ohne dass das erfasste Bild durch das Umgebungslicht beeinträchtigt oder nur vernachlässigbar beeinträchtigt wird, und dass die Probe in einem Abstand zwischen 50 µm und 2 cm von den Pixeln angeordnet ist.

2. Verfahren nach Anspruch 1, wobei das Detektionsspektralband (Δλ₂₀) zwischen 800 nm und 1200 nm oder zwischen 800 nm und 1000 nm liegt.

3. Verfahren nach einem der vorstehenden Ansprüche, wobei das Beleuchtungsspektralband (Δλ₁₂) zwischen 800 nm und 1200 nm oder zwischen 800 nm und 1000 nm liegt.

4. Verfahren nach einem der vorstehenden Ansprüche, bei dem:
- sich das Beleuchtungsspektralband über eine Bandbreite von höchstens 50 nm und vorzugsweise weniger als 20 nm erstreckt;
- und/oder das Detektionsspektralband über eine Bandbreite von höchstens 50 nm, vorzugsweise weniger als 20 nm erstreckt.

5. Verfahren nach einem der vorstehenden Ansprüche, wobei das Detektionsspektralband (Δλ₂₀) durch ein auf dem Bildsensor angeordnetes Hochpass- oder Bandpass- Detektionsfilter (29) definiert ist, wobei das Detektionsfilter so konfiguriert ist, dass es Wellenlängen im sichtbaren Spektralband aussperrt.

6. Verfahren nach einem der vorstehenden Ansprüche, wobei das Beleuchtungsspektralband (Δλ₁₂) durch ein mit der Lichtquelle (11) gekoppeltes Beleuchtungsfilter (19) definiert ist.

7. Verfahren nach einem der vorstehenden Ansprüche, bei dem in Schritt b) der Bildsensor einer Belichtungslichtwelle (14) ausgesetzt wird, wobei das Verfahren die Anwendung eines holografischen Rekonstruktionsoperators (h) auf das in Schritt b) erfasste Bild (*I₀*) umfasst, um ein Bild (A_{Z}) zu erhalten, das einen komplexen Ausdruck der Belichtungslichtwelle darstellt.

8. Vorrichtung (1) zur Beobachtung einer Probe (10), umfassend:
- eine Lichtquelle (11), die so ausgelegt ist, dass sie einen zur Probe hin verlaufenden Beleuchtungsstrahl in einem Beleuchtungsspektralband (Δλ₁₂) aussendet;
- einen pixelbasierten Bildsensor (20) mit mindestens 10.000 Pixeln, der so ausgelegt ist, dass er ein Bild (*I₀* ) in einem Detektionsspektralband (Δλ₂₀) erfasst;
- einen Halter (10s), der so ausgelegt ist, dass er die Probe zwischen der Lichtquelle und dem Bildsensor hält;
wobei die Vorrichtung so ausgelegt ist, dass sich keine abbildende Optik zwischen dem Bildsensor und der Probe befindet, wenn die Probe auf dem Halter gehalten wird;
und dass der Bildsensor ( 20) so beschaffen ist, dass in jedem genannten derPixel:
- sich das Detektionsspektralband (Δλ₂₀) über 800 nm hinaus erstreckt;
- das Detektionsspektralband (Δλ₂₀) filtert Wellenlängen im sichtbaren Spektralband aus und erstreckt sich mindestens zwischen 400 nm und 750 nm;
sodass die Bilderfassung bei Umgebungslicht im sichtbaren Spektralband erfolgen kann, ohne dass das erfasste Bild durch das Umgebungslicht beeinträchtigt wird oder nur in vernachlässigbarem Maße beeinträchtigt wird;
und dass die Halterung so ausgelegt ist, dass sie die Probe in einem Abstand zwischen 50 µm und 2 cm von den Pixeln hält.

9. Vorrichtung nach Anspruch 8, wobei das Detektionsspektralband (Δλ₂₀) zwischen 800 nm und 1200 nm oder zwischen 800 nm und 1000 nm liegt.

10. Vorrichtung nach einem der Ansprüche 8 oder 9, wobei der Bildsensor mit einem Detektionsfilter (29) gekoppelt ist, das das Detektionsspektralband definiert.

11. Vorrichtung nach einem der Ansprüche 8 bis 10, wobei das Beleuchtungsspektralband (Δλ₁₂) zwischen 800 nm und 1200 nm oder zwischen 800 nm und 1000 nm liegt.

12. Vorrichtung nach einem der Ansprüche 8 bis 11, wobei:
- sich das Beleuchtungsspektralband (Δλ₁₂) über eine Bandbreite von höchstens 100 nm oder 50 nm und vorzugsweise weniger als 20 nm erstreckt;
- und/oder das Detektionsspektralband (Δλ₂₀) eine Bandbreite von höchstens 50 nm und vorzugsweise weniger als 20 nm aufweist.

13. Vorrichtung nach einem der Ansprüche 8 bis 12, wobei:
- die Lichtquelle (11) eine Laserlichtquelle ist;
- oder die Lichtquelle eine Leuchtdiode ist, die mit einem Beleuchtungsfilter (19) gekoppelt ist, wobei das Beleuchtungsfilter das Beleuchtungsspektralband definiert.

14. Vorrichtung nach einem der Ansprüche 8 bis 13, mit einer Verarbeitungseinheit (21), die so ausgelegt ist, dass sie einen holografischen Rekonstruktionsoperator auf das vom Bildsensor erfasste Bild anwendet, um ein komplexes Bild einer Belichtungslichtwelle (14), der der Bildsensor bei der Bilderfassung ausgesetzt ist, zu erhalten.

## Claims

1. Method for observing a sample (10), the sample being placed between a light source (11) and an image sensor (20), comprising at least 10000 pixels, the light source emitting an illuminating beam (12), which propagates to the sample, the illuminating light beam being emitted in an illumination spectral band (Δλ₁₂) lying above 800 nm, the method comprising the following steps:
a) illuminating the sample (10) with the light source;
b) acquiring an image of the sample (I₀) with the image sensor (20), no image-forming optics being placed between the sample and the image sensor;
the method being configured so that the image sensor (20) has, in each of said pixels, a detection spectral band (Δλ₂₀) that blocks wavelengths in a visible spectral band, lying at least between 400 nm and 750 nm, such that the image may be acquired in ambient light, in the visible spectral band, such that the image acquired is not affected, or affected negligibly, by the ambient light, and wherein the sample is placed at a distance between 50 µm and 2 cm from the pixels.

2. Method according to Claim 1, wherein the detection spectral band (Δλ₂₀) is comprised between 800 nm and 1200 nm or between 800 nm and 1000 nm.

3. Method according to any one of the preceding claims, wherein the illumination spectral band (Δλ₁₂) is comprised between 800 nm and 1200 nm or between 800 nm and 1000 nm.

4. Method according to any one of the preceding claims, wherein:
- the illumination spectral band has a bandwidth narrower than or equal to 50 nm, and preferably narrower than 20 nm;
- and/or the detection spectral band has a bandwidth narrower than or equal to 50 nm, and preferably narrower than 20 nm.

5. Method according to any one of the preceding claims, wherein the detection spectral band (Δλ₂₀) is defined by a high-pass or band-pass detection filter (29) placed on the image sensor, the detection filter being configured to block wavelengths in the visible spectral band.

6. Method according to any one of the preceding claims, wherein the illumination spectral band (Δλ₁₂) is defined by an illumination filter (19), coupled to the light source (11).

7. Method according to any one of the preceding claims, wherein, in step b), the image sensor is exposed to an exposure light wave (14), the method comprising applying a holographic reconstruction operator (h) to the image (I₀) acquired in b), so as to obtain an image (A_{z}) representative of a complex expression of the exposure light wave.

8. Device (1) for observing a sample (10), comprising:
- a light source (11), configured to emit an illuminating beam that propagates toward the sample, in an illumination spectral band (Δλ₁₂) ;
- a pixelated image sensor (20), comprising at least 10000 pixels, and configured to acquire an image (I₀) in a detection spectral band (Δλ₂₀);
- a holder (10s), arranged to hold the sample between the light source and the image sensor;
the device being configured such that no image-forming optics are placed between the image sensor and the sample when the sample is held on the holder;
and that the image sensor (20) is such that, in each of said pixels,
- the detection spectral band (Δλ₂₀) lies above 800 nm;
- the detection spectral band (Δλ₂₀) blocks wavelengths in a visible spectral band, lying at least between 400 nm and 750 nm;
such that image acquisition may be performed under ambient light, within the visible spectral range, without the acquired image being affected, or affected negligibly, by the ambient light ;
and that sample is placed at a distance between 50 µm and 2 cm from the pixels.

9. Device according to Claim 8, wherein the detection spectral band (Δλ₂₀) is comprised between 800 nm and 1200 nm or between 800 nm and 1000 nm.

10. Device according to any one of Claims 8 or 9, wherein the image sensor is coupled to a detection filter (29), defining the detection spectral band.

11. Device according to any one of Claims 8 to 10, wherein the illumination spectral band (Δλ₁₂) is comprised between 800 nm and 1200 nm or between 800 nm and 1000 nm.

12. Device according to any one of Claims 8 to 11, wherein:
- the illumination spectral band (Δλ₁₂) has a bandwidth of less than or equal to 100 nm or 50 nm, and preferably less than 20 nm;
- and/or the detection spectral band (Δλ₂₀) has a bandwidth of less than or equal to 50 nm, and preferably less than 20 nm.

13. Device according to any one of Claims 8 to 12, wherein:
- the light source (11) is a laser light source;
- or the light source is a light-emitting diode coupled to an illumination filter (19), the illumination filter defining the illumination spectral band.

14. Device according to any one of Claims 8 to 13, comprising a processing unit (21) configured to apply a holographic reconstruction operator to the image acquired by the image sensor, so as to obtain a complex image of an exposure light wave (14) to which the image sensor is exposed during the acquisition of the image.
